# FASCICULE DE BREVET EUROPEEN

(11) **EP 3 603 024 B1**
(45) Date de publication et mention de la délivrance du brevet: **24.11.2021**
(21) Numéro de dépôt: 18715784.7
(22) Date de dépôt: 22.03.2018
(51) Int. Cl.: H04L 29/08, H04L 29/06

(54) **PROCÉDÉ DE RECOMMANDATION D'UNE PILE DE COMMUNICATION**
VERFAHREN ZUR EMPFEHLUNG EINES KOMMUNIKATIONSSTAPELS
METHOD FOR RECOMMENDING A COMMUNICATION STACK

(30) Priorité: 24.03.2017 FR 1752498
(43) Date de publication de la demande: 05.02.2020
(73) Titulaire: ORANGE, 92130 Issy-les-Moulineaux (FR)
(72) Inventeur: FROMENTOUX, Gaël, 92326 Châtillon Cedex (FR); FIEAU, Frédéric, 92326 Châtillon Cedex (FR); BRAUD, Arnaud, 92326 Châtillon Cedex (FR)
(86) Numéro de dépôt international: PCT/FR2018/050698
(87) Numéro de publication internationale: WO 2018/172707

(56) Documents cités:
- EP-A1- 1 432 213
- CN-A- 102 143 204
- US-A1- 2010 003 928
- US-B1- 7 565 413

## Description

### 1. Domaine de l'invention

La demande d'invention se situe dans le domaine des réseaux de communication TCP/IP.

### 2. Etat de la technique antérieure

Les protocoles utilisés par un terminal pour communiquer sur les réseaux IP (en anglais *Internet Protocol*) se sont beaucoup diversifiés ces dernières années après une période où peu d'évolutions étaient à noter. La pile de protocoles, correspondant aux différents protocoles de communication utilisés à chaque couche (physique, liaison, réseau, transport, session, présentation, application) peuvent varier d'une communication à l'autre. Le développement de la sécurisation des échanges a également pour conséquence une plus grande variété de ces protocoles sachant que des versions sécurisées des protocoles jusque-là utilisés ont été développées. Ces nouveaux protocoles sont souvent proposés par les fournisseurs de contenus, également fournisseurs de terminaux et/ou de systèmes d'exploitation, qui peuvent plus facilement introduire de nouveaux protocoles puisqu'ils maîtrisent aussi bien le terminal client que les serveurs de contenus. Le développement de nouveaux protocoles par les fournisseurs de contenus se vérifie d'autant plus qu'il s'agit de protocoles intervenant à partir de la couche transport et jusqu'à la couche application, c'est-à-dire pour assurer la communication de bout en bout. A côté des protocoles historiques, à savoir HTTP (*en anglais HyperText Transfer Protocol*) sur TCP (*en anglais Transport Control Protocol*) (ou UDP (*en anglais User Datagram Protocol*)) sur IP (*en anglais Internet Protocol*)*,* des protocoles de chiffrement de la couche transport, à savoir TLS (*en anglais Transport Layer Security*) ou DTLS (*en anglais Datagram Transport Layer Security*) peuvent être utilisés. Au niveau applicatif, il est désormais possible d'utiliser le protocole HTTP/2 et il est également possible d'utiliser le protocole QUIC (*en anglais Quick UDP Internet connections*) comme protocole de transport. Ce ne sont que quelques exemples des nouveaux protocoles utilisés par les nœuds terminaux pour communiquer sur les réseaux IP et cette liste pourrait être complétée par d'autres protocoles en cours de définition ou utilisés sur des réseaux de tests notamment. Cette variété de protocoles s'accompagne en outre d'une variété de versions. Pour un même protocole, plusieurs versions existent le plus souvent, et la diversité des piles protocolaires s'enrichit donc de la diversité de protocoles d'une part et de la variété de versions d'un même protocole d'autre part. Cette richesse protocolaire des communications entre des nœuds d'extrémité, si elle répond à des besoins de sécurité, de rapidité, de richesse d'informations, introduit par contre une complexité dans la gestion des équipements intermédiaires en charge de router le trafic mais aussi d'identifier, d'analyser et d'optimiser les communications. Les opérateurs en charge de la gestion des équipements intermédiaires sont de plus en plus confrontés à des situations où des services, notamment liés à la localisation et la résolution d'incidents, sont dégradés voire interrompus en raison de ces évolutions de protocoles. Une communication entre deux nœuds d'extrémité peut largement différer en fonction du nœud, du service utilisé, de l'instant où la communication est établie et les opérateurs en charge d'acheminer les communications doivent s'adapter à ce contexte. Les négociations des protocoles utilisés dans les différentes couches protocolaires ne sont pas standardisées et s'il demeure possible pour l'opérateur d'identifier les protocoles utilisés, il ne lui est pas possible d'intervenir dans la sélection de ces protocoles. Or le choix des protocoles par les nœuds d'extrémité impacte les services mis en œuvre par les opérateurs des réseaux acheminant les données des communications établies entres les nœuds d'extrémité. Il existe un moyen pour les nœuds d'extrémité de négocier un protocole, notamment via le protocole HTTP et les options « alternative services » spécifiés dans le document IETF RFC 7838 (« HTTP alternative services »). Ce protocole est cependant insuffisant car d'une part il est basé sur le protocole HTTP, ce qui limite son intérêt, et d'autre part, il ne permet de négocier qu'un protocole et non pas un ensemble de protocoles utilisés pour les différentes couches de la pile protocolaire. En outre, ce moyen ne permet pas à un équipement intermédiaire tel qu'un serveur CDN ou cache, par exemple de l'opérateur, de pouvoir proposer de nouveaux protocoles aux entités d'extrémité. Cette solution ne permet donc pas, pour des serveurs en charge de la fourniture effective de contenus à des terminaux d'intervenir sur les piles protocolaires d'une communication entre deux nœuds d'extrémité. US 2010/003928 A1 concerne un mécanisme de guidage de compression d'en-tête pour les dispositifs mobiles initiant certaines applications et/ou protocoles. Un utilitaire de compression sélective d'en-tête (SHC) utilise un message de protocole d'initiation de session (SIP) pour fournir des conseils de compression robuste d'en-tête (ROHC) à un dispositif mobile initiant un appel impliquant des applications, protocoles et/ ou options de service sélectionnés (liés au SIP). CN 102 143 204 A concerne une plate-forme de médiation destinée à être installée dans un réseau de transport de messages entre un ou plusieurs clients et un ou plusieurs serveurs ou entre un et plusieurs clients, un ou plusieurs serveurs et au moins un proxy conformément à des piles de protocoles. US 7 565 413 B1 divulgue un mécanisme de redirection des demandes de contenu d'un protocole web vers un protocole de fichier.

Un des buts de l'invention est de remédier à ces inconvénients de l'état de la technique.

### 3. Exposé de l'invention

L'invention vient améliorer la situation à l'aide d'un procédé de recommandation comme celui de la revendication 1.

Les contenus demandés par des utilisateurs sont le plus souvent hébergés et accessibles via des serveurs de type CDN (en anglais Content Delivery Networks) ou des serveurs de cache. Ces serveurs sont connus et sollicités par les clients suite à un message de redirection émis par un serveur identifié par exemple dans un serveur de type DNS (en anglais Domain Name Server). Un terminal, dans les réseaux de communication, obtient rarement un contenu directement d'un premier serveur initialement sollicité mais plus souvent d'un second serveur agissant en délégation du premier serveur. Cette délégation correspond à un accord établi entre le premier serveur et le second serveur pour faire en sorte que les contenus soit disponibles à proximité des utilisateurs pour moins consommer de ressources (bande passante entre équipements et occupation des équipements). Un contenu pour lequel un terminal sollicite un premier serveur doit être compris dans un sens large et peut comprendre un contenu audio, vidéo, du texte ou des images mais il peut aussi comprendre un programme notamment dans le contexte des « Web Services » ou bien un programme API (en anglais Application Programming Interface).

L'information d'accessibilité du second serveur, par cette délégation, est transmise au terminal du client pour qu'il le sollicite pour obtenir le contenu désiré. Sachant qu'il existe une forte hétérogénéité des infrastructures et notamment des protocoles de communication utilisés par les différents serveurs et les terminaux des clients, il est avantageux d'informer le terminal sur les protocoles de communication à utiliser pour communiquer avec un serveur donné vers lequel il va être redirigé. Le premier serveur ayant un accord avec le second serveur peut ainsi informer le terminal d'un client sur la nécessité de changer un ou plusieurs protocoles de communication que le terminal a utilisé initialement pour communiquer avec le premier serveur. Cette information est transmise au terminal lorsque le premier serveur détecte que la pile de communication utilisée n'est pas conforme avec un paramètre de communication du second serveur en charge de la fourniture effective du contenu auquel le terminal veut accéder.

A la réception de ce message en provenance du premier serveur, outre l'information sur l'accessibilité du second serveur représenté par une adresse IP (en anglais Internet Protocol) ou une information de type FQDN (en anglais Fully Qualified Domain Name), le terminal obtient une information sur le besoin de changer un ou plusieurs protocoles de communications pour la session établie ou à établir avec le second serveur. Le terminal transmet une requête d'obtention d'un contenu au second serveur identifié à partir de l'information d'accessibilité reçue. Lorsque le second serveur reçoit cette requête, il propose une nouvelle pile de communication si besoin, à partir d'une donnée liée à la requête ou du réseau de communication. Si une pile est proposée par le terminal, le second serveur peut effectivement sélectionner cette pile. Le second serveur, pour sélectionner une nouvelle pile, peut également s'appuyer sur l'adresse IP (en anglais Internet Protocol) utilisée par le terminal pour transmettre la requête, par exemple si l'adresse peut être associée à un opérateur pour lequel une ou plusieurs piles de communication sont associées. La donnée peut comprendre, dans une alternative, une information sur un protocole utilisé dans la requête, le type de terminal transmettant la requête, l'occupation du réseau de communication, le numéro d'AS (en anglais Autonomous System), le type de réseau d'accès du réseau de communication ou bien une combinaison de ces différentes données.

La recommandation d'une nouvelle pile peut consister à modifier un ou plusieurs protocoles de communication composant la pile de communication initiale ou bien à changer la version d'un ou plusieurs protocoles de la pile utilisée par le terminal. La recommandation d'une pile de communication intègre donc aussi bien une recommandation d'une version de protocole qu'un changement de protocole parmi les différents protocoles composant la pile de communication reçue par le premier serveur dans la requête d'un contenu. L'avantage de recommander une pile de communication plutôt que de modifier les différents protocoles composant la pile un à un est d'assurer une cohérence dans les différents protocoles composant la pile. Notamment, si un protocole au niveau transport est sécurisé, il pourra être inopportun de sélectionner un protocole applicatif proposant également une sécurisation, qui serait redondante avec la fonction de sécurité supportée au niveau transport.

Grâce au procédé de recommandation, dans le cas où le terminal, ayant initié une session de données avec le premier serveur, accepte la pile recommandée reçue, alors il poursuit cette session avec le second serveur en utilisant la pile recommandée reçue de celui-ci. Dans un autre mode de réalisation, le terminal initie une nouvelle session avec le second serveur indiqué par le premier serveur dans le message de redirection. Cette nouvelle session est alors établie par le terminal en utilisant la pile de communication recommandée reçue du second serveur.

Dans une alternative, le premier serveur fournit lui-même le contenu et forme une seule entité avec le second serveur. Le premier serveur est constitué par exemple de plusieurs entités virtuelles, dont l'une d'entre elles fournit le contenu requis par le terminal lors de l'établissement de la session de données. Dans cette alternative, le premier serveur informe le terminal sur les piles de communication à utiliser pour obtenir le contenu.

Selon un premier aspect, le procédé de recommandation d'une pile de communication comprend en outre une étape d'émission à destination du premier serveur d'un message d'information comprenant la pile recommandée.

Le second serveur informe le premier serveur sur la pile recommandée qui a été transmise au terminal. L'information transmise par le second serveur peut être avantageusement utilisée pour que le premier serveur connaisse les piles de communications supportées par le second serveur et puisse, lors d'une prochaine session, informer un terminal sur les piles de communication qu'elle peut utiliser pour la session. Le message d'information sera envoyé avant ou après que le second serveur aura reçu un message d'obtention du contenu transmis à partir de la pile recommandée reçue du terminal. En effet, indépendamment du fait que le terminal a effectivement accepté la pile de communication recommandée par le second serveur, l'information transmise au premier serveur lui donne une indication sur les piles de communication supportées par le second serveur.

Selon un deuxième aspect, le message de requête d'obtention du contenu comprend au moins une pile de communication.

Le terminal peut avantageusement informer le second serveur sur les piles protocolaires parmi lesquelles il peut sélectionner une pile à utiliser pour l'obtention du contenu par le terminal. A la réception de cette information, le second serveur peut d'une part identifier au moins une pile que lui-même supporte et éviter de transmettre un message de recommandation comprenant une pile qui ne serait pas valide pour le terminal. L'envoi de piles de communication par le terminal évite ainsi de ralentir l'accès au contenu pour le terminal ou d'empêcher l'établissement ou la poursuite de la session avec le second serveur. Dans une option, le terminal peut tenir compte des piles de communication transmises par le premier serveur pour ne transmettre au second serveur que les piles de communication communiquées par le premier serveur. La pile de communication présente dans la requête représente alors une donnée pertinente pour le choix de la pile de communication recommandée transmise par le second serveur.

Selon un troisième aspect, la pile recommandée est transmise dans un champ de la couche applicative du message de recommandation.

L'information concernant la recommandation de la pile peut être transmise dans un champ de la couche applicative. Notamment, le message de recommandation peut comprendre une information de type URL (en anglais Uniform Resource Locator) à laquelle le terminal pourra se connecter pour obtenir une nouvelle pile de communication qu'il pourra ensuite accepter ou non, et si oui, utiliser pour obtenir le contenu auprès du second serveur. L'intérêt d'utiliser la couche applicative est notamment de permettre une mise en œuvre du procédé dans un réseau de communication où les échanges sont sécurisés par des protocoles de sécurité au niveau réseau ou au niveau transport. Ainsi, seules les informations au niveau applicatif pourraient être accessibles. D'autre part, le recours à une transmission de la pile dans la couche applicative peut également être dû au seul support de ce type de transmission par le second serveur et le terminal. Des informations dans les en-têtes des protocoles RTP (en anglais Real-Time Transport Protocol), HTTP1, HTTP2 peuvent ainsi être utilisés.

Selon un quatrième aspect, la pile recommandée est transmise dans un champ de la couche transport du message de recommandation.

L'information concernant la recommandation de la pile peut être transmise dans un champ de la couche transport, par exemple à travers un code qui identifie la pile à utiliser pour continuer la session en cours ou initier une nouvelle session à partir de cette pile. Notamment, cette information peut être transmise à travers un code transmis dans l'en-tête du protocole QUIC (en anglais Quick UDP Internet Connections). L'utilisant de la couche transport, sécurisée ou non, présente un double intérêt. D'une part la diversité de protocoles de transport est moindre par rapport aux protocoles applicatifs et une plus grande interopérabilité est probable. D'autre part, si un protocole de transport sécurisé, tel que TLS est utilisé, le message de recommandation peut être uniquement accessible par le terminal.

Selon un cinquième aspect, la donnée relative au réseau de communication est reçue en provenance d'une entité de gestion du réseau de communication.

Les raisons pouvant justifier qu'un terminal change de pile de communication concernent notamment les politiques relatives à la qualité de service qui peuvent impliquer la charge du second serveur, les bandes passantes disponibles sur les liens d'accès du réseau de communication voire les accords avec des opérateurs intervenant ou utilisant le réseau de communication. Une entité de gestion, telle qu'une plate-forme d'administration du réseau, un gestionnaire de la qualité de service ou une entité en charge des liens d'interconnexion dans le cas où le réseau de communication est opéré par des opérateurs distincts, peut transmettre une information permettant de sélectionner une pile adaptée au contexte du réseau. Le second serveur peut ainsi recevoir plusieurs données concernant le réseau et utiliser ces informations, en plus des informations présentes dans la requête d'obtention pour sélectionner la pile protocolaire la plus adaptée.

Les différents aspects du procédé de recommandation d'une pile de communication qui viennent d'être décrits peuvent être mis en œuvre indépendamment les uns des autres ou en combinaison les uns avec les autres.

L'invention concerne également un procédé de redirection comme celui de la revendication 7.

Un premier serveur sollicité par un terminal pour délivrer un contenu, généralement identifié au préalable par une résolution DNS opérée par un serveur DNS sollicité par le terminal, redirige le plus souvent le terminal vers un second serveur, soit plus proche du terminal, soit plus adapté pour fournir un contenu spécifique, soit pour assurer une répartition de charge entre serveurs de livraison de contenus. Le premier serveur, selon l'art antérieur, ne fait que rediriger un terminal vers un second serveur en fonction de paramètres de localisation et/ou de type d'application, voire en fonction de relations entre le premier et le second serveur. Dans cette invention, le premier serveur apporte des fonctions supplémentaires puisqu'il détecte que le terminal n'utilise pas une pile appropriée pour obtenir le contenu d'un second serveur vers lequel il va être redirigé et il informe le terminal sur le fait que celui-ci n'utilise pas une pile adaptée.

L'incompatibilité de la pile utilisée par le terminal peut consister à ce que la pile utilisée ne puisse pas être utilisée pour la communication avec le second serveur ou bien que la pile ne permette pas une utilisation optimale des fonctions du second serveur, par exemple en terme de qualité de service, de sécurité ou de routage, ou bien qu'elle ne soit pas adaptée au réseau de communication entre le terminal et le second serveur. Pour détecter l'incompatibilité, il peut utiliser des informations présentes dans le message de la requête d'obtention (adresses IP, protocoles de communication utilisés, informations transmises par des entités du réseau de communication par exemple pour indiquer des problèmes de congestion et des mises à jour des protocoles supportés à titre d'exemples). Une fois qu'il a détecté cette incompatibilité, le premier serveur informe le terminal soit en préconisant une nouvelle pile de communication à utiliser, soit en lui indiquant qu'il doit modifier la pile de communication, la recommandation de la pile à utiliser devant être ensuite transmise par le second serveur lors de futurs échanges avec le terminal.

Selon un premier aspect, le message de redirection comprend en outre au moins une pile de communication.

Le premier serveur, en complément de l'information concernant une nouvelle pile à utiliser par le terminal peut avantageusement transmettre à celui-ci une ou plusieurs piles qu'il pourra utiliser pour obtenir le contenu auprès du second serveur. Le message de redirection indique ainsi non seulement le second serveur que doit solliciter le terminal et l'information sur un changement de pile, mais aussi une ou des piles à utiliser pour la session en cours à poursuivre avec le second serveur ou la nouvelle session à établir avec ce second serveur. Dans une option, le premier serveur peut proposer au terminal des piles de communications compatibles avec le second serveur, par exemple si le premier serveur a mémorisé les piles recommandées présentes dans des messages d'information transmis par le second serveur. Dans une autre alternative, le premier serveur peut se baser sur une table indiquant les piles compatibles avec les différents seconds serveurs auxquels un terminal est susceptible d'être redirigé.

Selon un deuxième aspect, le procédé de redirection comprend en outre une étape de réception en provenance du terminal d'un message contenant une information de refus de la pile recommandée reçue.

Il est rappelé que le second serveur transmet au terminal une pile recommandée pour la session initialisée avec le premier serveur. Le terminal peut ne pas accepter la pile recommandée transmise par le second serveur. Il peut refuser la pile recommandée parce qu'il ne supporte pas un des protocoles de communication de la pile ou bien parce que la pile recommandée n'est pas compatible avec l'application utilisée dans la session ou parce qu'elle n'est pas compatible avec une politique d'un opérateur fournissant une connexion au terminal. Dans une alternative, le terminal émet un message vers le premier serveur pour lui indiquer qu'il n'accepte pas la pile recommandée transmise par le second serveur.

Selon un troisième aspect, le paramètre de communication du second serveur est un protocole de communication.

Lorsque le premier serveur redirige un terminal vers un second serveur, par exemple un serveur de cache, il peut également informer le terminal que la pile utilisée pour initier la session n'est pas conforme avec le second serveur vers lequel le terminal va être redirigé. Le premier serveur, pour réaliser cela, peut avoir accès à une table dans laquelle sont enregistrés les protocoles supportés par les seconds serveurs ainsi que leurs combinaisons formant des piles admises. Cette table peut par exemple être mise à jour avec les messages d'information reçus des seconds serveurs lors de la sollicitation de terminaux. La table peut en outre être plus complète et prendre en compte par exemple des piles de communication à des services et/ou des terminaux.

Les différents aspects du procédé de redirection qui viennent d'être décrits peuvent être mis en œuvre indépendamment les uns des autres ou en combinaison les uns avec les autres.

L'invention concerne encore un dispositif de recommandation d'une pile de communication, comme celui de la revendication 10.

Ce dispositif, apte à mettre en œuvre dans tous ses modes de réalisation le procédé de recommandation d'une pile de communication qui vient d'être décrit, est destiné à être mis en œuvre dans un serveur de données.

L'invention concerne aussi un dispositif de redirection comme celui de la revendication 11.

Selon un aspect, le dispositif de redirection comprend en outre un récepteur agencé pour recevoir en provenance du terminal un message contenant une information de refus de la pile recommandée reçue.

Ce dispositif, apte à mettre en œuvre dans tous ses modes de réalisation le procédé de redirection qui vient d'être décrit, est destiné à être mis en œuvre dans un serveur de données. L'invention concerne aussi un terminal comme celui de la revendication 13.

L'invention concerne aussi un programme d'ordinateu, comme celui de la revendication 15, comprenant des instructions pour la mise en œuvre des étapes du procédé de recommandation d'une pile de communication qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur comme celui de la revendication 16.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Les programme selon l'invention peuvent être en particulier téléchargés sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique une architecture du réseau de communications où est mis en œuvre le procédé de recommandation d'une pile de communication, selon l'invention,
- la figure 2 présente des situations dans lesquelles le procédé de recommandation d'une pile de communication est requis, selon un aspect de l'invention,
- la figure 3 présente un aperçu du procédé de recommandation d'une pile de communication,
- la figure 4 présente les différentes étapes du procédé de recommandation d'une pile de communication, selon un premier mode de réalisation de l'invention,
- la figure 5 présente les différentes étapes du procédé de recommandation d'une pile de communication, selon un second mode de réalisation de l'invention,
- la figure 6 présente les différentes étapes du procédé de recommandation d'une pile de communication, selon un troisième mode de réalisation de l'invention,
- la figure 7 présente un exemple de structure d'un dispositif de recommandation d'une pile de communication, selon un aspect de l'invention,
- la figure 8 présente un exemple de structure d'un dispositif de redirection, selon un aspect de l'invention.

### 5. Description détaillée d'au moins un mode de réalisation de l'invention

Dans la suite de la description, on présente des exemples de plusieurs modes de réalisation de l'invention se basant sur des protocoles IP (en anglais Internet Protocol), mais l'invention s'applique également à d'autres protocoles de communications.

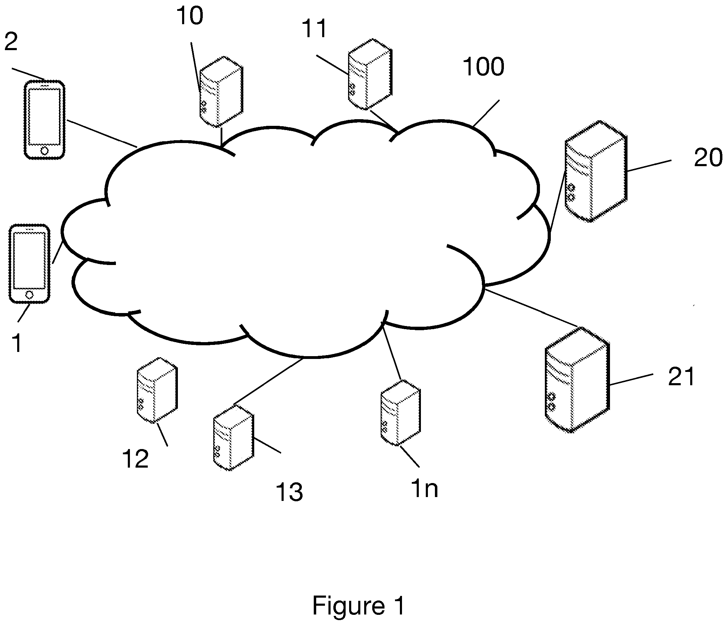

On se réfère tout d'abord à la **figure 1** qui présente de façon schématique une architecture du réseau de communications où est mis en œuvre le procédé de recommandation d'une pile de communication. Dans cette figure, un réseau de communications 100 est utilisé pour véhiculer les flux de communications entre les terminaux 1 et 2, les premiers serveurs de contenus 20 et 21 et les seconds serveurs de contenus 10, 11, 12, 13, 1n qui sont déployés pour fournir effectivement les contenus initialement demandés par les terminaux 1, 2 aux serveurs 20 et 21. Un terminal peut être selon les modes de réalisation, un terminal fixe ou mobile, un serveur, un terminal M2M (en anglais *machine to machine*)*,* une passerelle ou tout autre équipement en capacité d'établir une session de données avec un autre équipement. Les serveurs de contenus 20, 21 sont aussi appelés premiers serveurs dans ce document et peuvent notamment être, selon les modes de réalisation, des serveurs HTTP (en anglais *Hypertext Transfer Protocol*)*,* des serveurs FTP (en anglais *File Transfer Protocol*)*,* des serveurs CDN (en anglais *Content Delivery Networks*)*,* des serveurs où sont mémorisés de façon temporaire des contenus (serveurs cache). Les serveurs 10, 11, 12, 13, 1n sont des serveurs positionnés le plus souvent plus près des terminaux que les premiers serveurs sollicités par un terminal et ont pour principal objet de sauvegarder la bande passante dans les réseaux et d'améliorer la qualité d'expérience des usagers utilisant les terminaux 1, 2. Ces serveurs 10, 11, 12, 13, 1n, ont le plus souvent un accord avec les entités gérant les premiers serveurs 20, 21 pour héberger certains contenus proposés par les serveurs 20, 21 et peuvent être des serveurs cache voire des serveurs CDN en fonction des modes de réalisation. Le réseau de communication 100 peut être un réseau IP mis en œuvre pour fournir les services dits « fixes » ou « mobiles ». Il peut notamment s'agir d'un réseau de type ADSL (an anglais *Asymmetric Digital Subscriber Line*)*,* de type 3GPP (en anglais *3rd Generation Partnership Project*)*,* un réseau pour les services des entreprises ou un réseau pour les services d'une clientèle résidentielle.

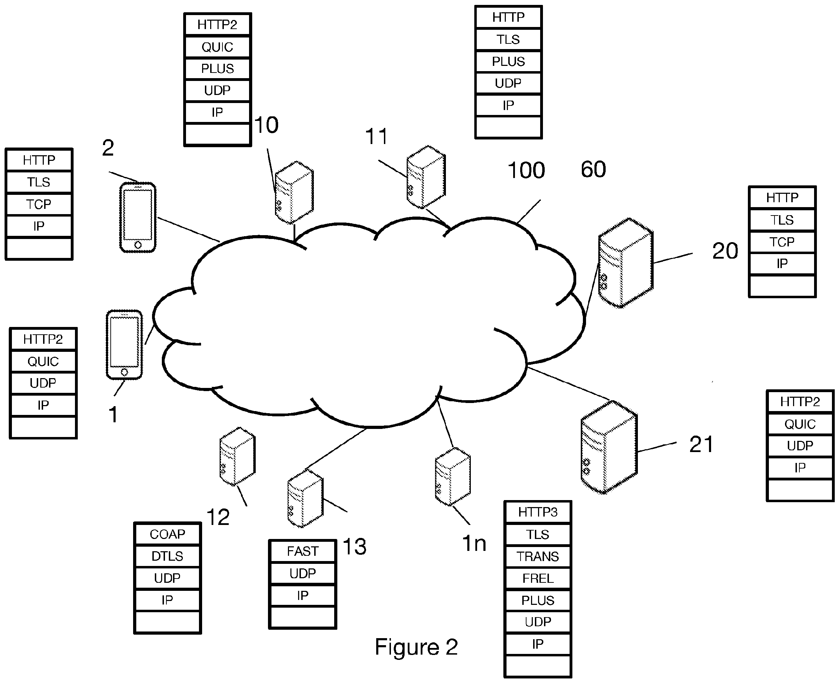

En relation avec la **figure 2****,** on présente maintenant présente des situations dans lesquelles le procédé de recommandation d'une pile de communication est requis, selon un aspect de l'invention.

Le terminal 1 établit une session avec le serveur 21 à partir des protocoles de communication IP, UDP (en anglais *User Datagram Protocol*)*,* QUIC (en anglais *Quick UDP Internet Connections*)*,* HTTP2. Cette session aura été précédée notamment d'une connexion du terminal 1 au réseau de communication 100 et probablement d'une requête et réponse de type DNS (en anglais *Domain Name Server*) pour que le terminal récupère l'adresse IP du serveur de contenus 21 aussi appelé premier serveur. Les protocoles de communication IP/UDP/QUIC/HTTP2 composant la pile de communication utilisée par le terminal 1 pour établir une session avec le serveur 21 peuvent être sélectionnés par défaut. Des protocoles de communications ou des versions de protocoles de cette pile peuvent aussi donner lieu à une négociation entre le serveur 21 et le terminal 1 par exemple en utilisant des informations de type « Alternate services » convoyées dans un champ HTTP et relevant de techniques connues.

Le terminal 2 établit une session avec le serveur 20 en utilisant une pile de communication HTTPATLS/TCP/IP selon des techniques comparables à ce qui a été décrit pour la session entre le terminal 1 et le premier serveur de contenus 21.

Les serveurs de contenus 20 et 21 peuvent dans certains cas fournir les contenus requis par les terminaux 2 et 1 mais le plus souvent, les serveurs de contenus redirigeront les terminaux vers d'autres serveurs en charge de livrer les contenus demandés aux terminaux 1 et 2. Le choix d'un ou plusieurs serveurs 10, 11, 12, 13, 1n est effectué en fonction des accords entre premiers serveurs de contenus et seconds serveurs (qui peuvent aussi être appelés serveurs intermédiaires) ainsi qu'en fonction de la localisation des terminaux 1 et 2 de façon à sélectionner un second serveur au plus près du terminal ayant demandé un contenu. Le second serveur peut également être sélectionné en fonction du type de contenu demandé (audio, vidéo, texte...). Les serveurs 10, 11, 12, 13, 1n peuvent être gérés, selon les cas, par l'opérateur du réseau de communication 100, par une entité gérant également les serveurs 20, 21 ou par une autre entité, par exemple en charge de la gestion des seconds serveurs et du service de livraison des contenus associés. Comme indiqué sur la figure 2, à titre d'exemple, les seconds serveurs sont susceptibles de mettre en œuvre une ou plusieurs piles de communication, identiques et/ou différentes des piles de communication supportées par les terminaux 1, 2 et les serveurs 20, 21. Le choix du support de certaines piles protocolaires peut dépendre des contenus proposés par ces seconds serveurs, des entités gérant ces seconds serveurs, voire de la maturité technologique de ces serveurs. Dans le mode de réalisation présenté dans la figure 2, chaque second serveur comprend une seule pile de communication à des fins de clarté mais un même serveur peut posséder plusieurs piles de communication. Le nombre de protocoles dans une pile de communication n'est pas limité à priori. Ainsi, dans la figure 2, une pile de communication peut posséder 3 protocoles de communication comme pour le second serveur 13 ou bien 7 comme le second serveur 1n.

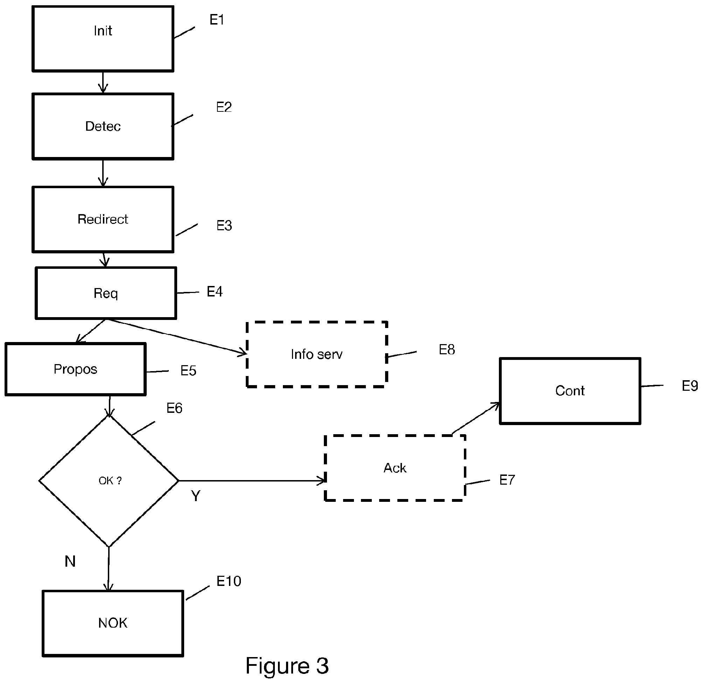

On se réfère maintenant à la **figure 3** qui présente un aperçu du procédé de recommandation d'une pile de communication.

Au cours d'une étape E1, un terminal initie une session de données avec un premier serveur de contenus, celui ayant probablement été communiqué au terminal lors d'échanges avec un serveur de mise en relation de type DNS. Cette session de données est établie en utilisant une pile de communication composée de plusieurs protocoles. Cette pile de communication peut être une pile par défaut ou une pile de communication négociée avec le premier serveur de contenus par exemple en utilisant une Websocket s'il s'agit d'un changement de version HTTP. Cette modification est liée à la session initialisée entre un terminal et un premier serveur de contenus mais ne permet pas de s'adapter à la pile de communication d'un second serveur qui sera possiblement communiqué au terminal pour effectivement livrer le contenu souhaité par le terminal lors de l'établissement de la session.

Lors d'une étape E2, le premier serveur de contenus détecte que la requête pour un contenu, relative à la session de données établie, est transmise en utilisant une pile de communication non compatible avec une pile de communication d'un second serveur vers lequel va être redirigé le terminal. Si le terminal utilise par exemple le protocole QUIC parmi les protocoles de la pile de communication, le serveur peut détecter une version QUIC non compatible. Dans une alternative, le premier serveur de contenus peut identifier un ou plusieurs protocoles de communication non compatible(s) dans la pile de communication utilisée par le terminal avec ce qui est supporté par le second serveur. Le mode de détection est propre au premier serveur de contenus et peut tenir compte de versions de protocoles, de protocoles voire de combinaison de protocoles sachant qu'un premier serveur de contenus pourrait considérer que des protocoles, pris indépendamment les uns des autres sont compatibles, mais qu'une combinaison de protocoles peut ne pas être acceptable par rapport à ce que supporte un second serveur. La combinaison de protocoles peut, dans un autre cas, ne pas être adaptée à un contexte réseau, par exemple lié à la congestion, ou à un service donné.

Dans une étape E3, le premier serveur de contenus transmet un message de redirection vers le terminal lui communiquant un second serveur qu'il doit joindre pour obtenir le contenu désiré, initialement demandé dans la session initialisée avec le premier serveur de contenus. Ce message de redirection peut comprendre l'adresse IP auquel peut être joint le second serveur, que l'on considère ici comme un serveur de cache ou bien une URL qui sera utilisée pour interroger un serveur DNS et récupérer une adresse IP du serveur de cache. Le message de redirection peut donc être un message HTTP de type 3xx (https://en.wikipedia.org/wiki/List_of_HTTP_status_codes). Ce message doit comprendre en outre une information indiquant au terminal qu'une modification de la pile de communication est nécessaire. Cette information peut consister à ajouter une variable par exemple de type « Change pile » qui sera mise à la valeur 1. Dans un autre mode de réalisation, si le premier serveur de contenus connait des piles de communication compatibles avec le second serveur et s'il est capable de transmettre une pile, l'information peut consister en une proposition de pile(s) de communication en plus ou en alternative à la variable émise.

A la réception de ce message de redirection, le terminal lors d'une étape E4, émet une requête pour obtenir le contenu vers le second serveur identifié dans le message de redirection, si besoin en ayant obtenu l'adresse IP par sollicitation d'un serveur DNS auparavant. Selon une alternative, le terminal transmet la requête en indiquant dans le message de requête la ou les pile(s) de communication communiquées par le premier serveur de contenus, si cela est le cas. Si le terminal n'a reçu aucune pile de la part du premier serveur de contenus ou s'il ne lui est pas possible de transmettre la ou les pile(s) reçues, il transmet la requête sans proposer de pile de communication. Le terminal envoie alors une requête d'obtention du contenu sans indication sur la ou les piles à utiliser.

Lors de l'étape E5, le second serveur répond au terminal par un message lui indiquant de changer de pile de communication. S'il a reçu une ou plusieurs piles de communication lors de l'étape E4, il peut sélectionner une ou plusieurs de ces piles pour les proposer au terminal et si le terminal ne lui a pas indiqué de pile(s) dans son message de requête, le second serveur en détermine au moins une pour la ou les proposer au terminal. Le choix d'une pile à transmettre au terminal peut dépendre du type de contenu demandé par le terminal, des piles supportées par le second serveur, du client ayant envoyé la requête ou de tout autre type d'information. Si plusieurs piles de communication sont possibles, le second serveur peut les classer par ordre de préférence pour que le terminal choisisse la première pile compatible à la réception de cette proposition.

Optionnellement, lors d'une étape E8, le second serveur peut informer le premier serveur de contenus en indiquant les piles de communication proposées au terminal. Cette option présente l'avantage pour le second serveur d'informer de façon régulière le premier serveur de contenus sur les piles qu'il supporte. Grâce à cette information, le premier serveur de contenus peut transmettre aux terminaux les propositions de piles de communication aux terminaux dans les messages de redirection correspondant à l'étape E3.

Lorsque le terminal reçoit le message comprenant la proposition de pile protocolaire en provenance du second serveur, il analyse les propositions et détermine s'il peut accepter une des piles proposées ou bien s'il doit refuser la proposition. Lors de l'étape E6, le terminal accepte ou non une des piles proposées. Ce choix est effectué en fonction des capacités du terminal, notamment en fonction des protocoles supportés par le terminal et/ou des possibilités pour lui de se configurer pour utiliser une des piles proposées. S'il est en capacité d'accepter plus d'une pile proposée par le second serveur, il utilise un algorithme pour sélectionner une des piles, par exemple en choisissant la première pile de la liste.

Si le terminal ne sélectionne aucune pile proposée par le second serveur, plusieurs options sont possibles. Il peut solliciter à nouveau le premier serveur de contenus lors d'une étape E10 et lui indiquer que le changement de pile n'est pas possible avec le second serveur indiqué dans le message de redirection. Le premier serveur de contenus, à la réception de ce message, pourra indiquer au terminal un autre second serveur en maintenant l'indication de changement de pile. Il pourra alternativement indiquer au terminal de re-contacter le même second serveur mais cette fois sans indiquer au terminal de changer de pile. Il pourra, encore dans une autre option, fournir le contenu désiré au terminal sans utiliser un second serveur.

Si le terminal accepte une des piles proposées par le second serveur, il transmet alors optionnellement un message d'acquittement lors d'une étape E7 au second serveur et transmet ensuite lors d'une étape E9 une requête au second serveur pour obtenir le contenu désiré en utilisant la pile de communication sélectionnée. Cette requête, selon une option, peut être transmise en utilisant la session de données en cours, initialement mise en œuvre avec le premier serveur de contenus. Dans une autre option, le terminal initie une nouvelle session avec le second serveur pour transmettre la requête d'obtention du contenu au second serveur. Si la pile de communication est largement modifiée, notamment pour ce qui concerne le protocole de communication de niveau réseau et/ou transport, une nouvelle session est établie entre le terminal et le second serveur.

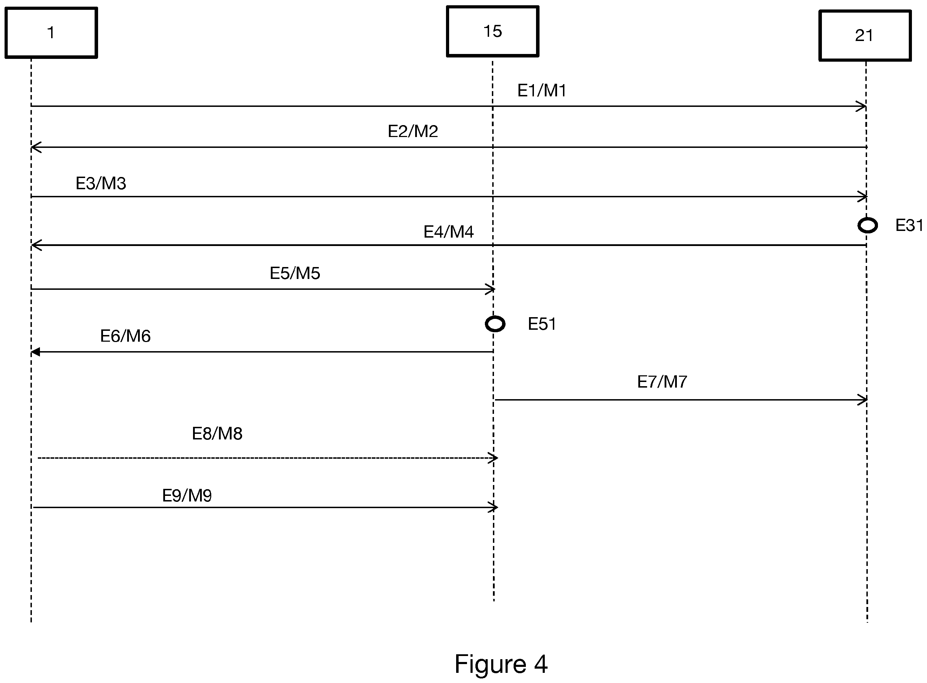

En relation avec la **figure 4****,** on présente les différentes étapes du procédé de recommandation d'une pile de communication, selon un premier mode de réalisation de l'invention.

Lors d'une étape E1, le terminal 1 transmet un message M1 d'initialisation de session à un serveur CDN 21 en utilisant une pile de communication QUIC/UDP/IP : (port a). Le serveur CDN 21 répond au terminal 1 par un message d'acquittement M2 lors d'une étape E2. Le terminal 1 transmet ensuite au cours d'une étape E3 un message M3 de requête d'un contenu vers le serveur CDN 21 en utilisant la même pile de communication QUIC/UDP/IP que pour le message M1 et en indiquant en outre par une information présente dans un en-tête qu'il est favorable à utiliser le serveur cache d'un opérateur. Le serveur CDN 21 détecte lors de l'étape E31 que les protocoles utilisés par le terminal 1 pour émettre le message M3 ne sont pas compatibles avec un paramètre de communication du serveur cache 15 vers lequel il va rediriger le terminal 1. Selon les modes de réalisation le serveur 21 peut prendre en compte l'adresse IP du terminal 1, un paramètre de qualité de service, l'engorgement du réseau de communication utilisé pour véhiculer la requête, le type du terminal 1 (tablette, PC, téléphone...), le type de réseau d'accès du terminal 1, une information de routage pour détecter la non-compatibilité. Le serveur 21 peut en outre s'appuyer sur une table pour identifier les compatibilités des piles protocolaires avec les serveurs caches. Le serveur CDN envoie ensuite un message de redirection de type HTTP 301 ou tout autre code approprié à la situation, dans un message M4 lors de l'étape E4. Ce message de redirection comprend une adresse IP du serveur de cache 15 que doit contacter le terminal 1 ou bien une information de type FQDN qui permettra in fine d'obtenir l'adresse IP du serveur de cache 1 suite à une résolution de type DNS, ou bien une information de type URL permettant au terminal 1 de joindre le serveur cache 15. Le message de redirection, dans une alternative, peut être un message OOB (en anglais *Out-Of-Band*) tel que défini dans https://tools.ietf.org/html/draft-reschke-http-oob-encoding-10. D'autres types de messages M4 permettant de rediriger un terminal vers un serveur cache peuvent être envisagés par exemple en utilisant les messages DNS. Le message M4 de redirection comprend en outre une variable S positionnée à 1 indiquant au terminal 1 que la redirection s'accompagne d'un changement de pile de communication. Dans ce mode de réalisation, le serveur CDN 21 propose en outre une pile de communication RTPATLS/UDP/IP à utiliser. La variable S de changement de pile et la pile recommandée sont convoyées dans un champ du protocole QUIC dans ce mode de réalisation. La pile de communication RTPATLS/UDP/IP est par exemple codée 11 dans le champ QUIC, ce qui permet au terminal 1, à la réception de la variable S positionnée à 1 et le code 11 dans le champ QUIC, d'identifier la pile de communication RTP/TLS/UDP/IP recommandée par le serveur CDN 21.

A la réception du message de redirection M4, le terminal 1 transmet une requête d'obtention du contenu au serveur de cache 15 dans un message M5 transmis à l'étape E5. Dans ce mode de réalisation, le message M5 comprend la pile de communication RTP/TLS/UDP/IP communiquée par le serveur CDN 21 ou bien un code correspondant à cette pile de communication. A ce stade, l'information sur la pile de communication n'est pas encore validée ou réfutée par le serveur de cache 15.

Le serveur de cache 15, lorsqu'il reçoit cette requête, identifie la pile de communication utilisée par le terminal 1 pour communiquer avec lui et sélectionne une nouvelle pile au cours d'une étape E51. Le terminal 1 ayant proposé une pile de communication dans le message M4, le serveur de cache 15 analyse la pile proposée et s'il s'agit d'une pile qu'il supporte, transmet un message M6 proposant au terminal 1 de modifier sa pile de communication et d'utiliser la pile recommandée, telle que transmise par le terminal 1 dans le message M5 dans ce mode de réalisation. S'il ne supporte pas la pile de communication proposée par le terminal 1 ou s'il préfère proposer une autre pile de communication, le serveur de cache 15 peut sélectionner une autre pile de communication pour la transmettre une autre pile au terminal 1 dans le message M6. Si le terminal utilise la pile QUIC/UDP/IP, les informations concernant les piles de communication peuvent avantageusement être transmises dans un champ du protocole QUIC. La sélection d'une nouvelle pile de communication peut prendre en compte différents paramètres parmi lesquels l'adresse IP utilisée par le terminal 1 pour transmettre la requête, le type du terminal 1, le réseau d'accès utilisé par le terminal 1, des paramètres de qualité de service du réseau de communications interconnectant le terminal 1 et le serveur CDN 21 ou tout autre information permettant d'affiner la sélection d'une pile de communication.

Le serveur de cache 15 dans une étape E7 facultative transmet un message M7, indiquant au serveur CDN la pile de communication proposée au terminal 10. Cette information transmise au serveur CDN permet à ce dernier de mettre à jour les listes de piles protocolaires supportées voire recommandées par le serveur de cache. Le serveur CDN pourra utiliser cette information lors d'une prochaine connexion d'un terminal pour lui indiquer une ou plusieurs piles de communication.

Lors d'une étape E8, le terminal 1, lorsqu'il reçoit le message M6, transmet un message M8 d'acquittement au serveur de cache 15 lui indiquant la bonne réception du message.

Dans le cas où le terminal 1 accepte la recommandation de pile de communication et la proposition de pile du serveur de cache, dans une étape E9, il transmet un nouveau message M9 de requête d'obtention du contenu en utilisant cette fois-ci la pile de communication proposée par le serveur de cache 15. Dans ce mode de réalisation, le message de requête est transmis en utilisant la pile de communication RTP/TLS/UDP/IP.

Dans le mode de réalisation décrit ci-dessous, le serveur CDN 21 ainsi que le serveur de cache 15 peuvent proposer plusieurs piles de communication au terminal lors des étapes respectives E4 et E6. Le terminal 1 peut également suggérer plusieurs piles de communication dans le message M5, par exemple s'il en a lui-même reçu plusieurs de la part du serveur CDN. Le serveur de cache 15 peut sélectionner une pile de communication pour recommander la pile utilisée par le terminal 1 en prenant en compte au moins une information relative à la requête d'obtention à un contenu reçue, par exemple le type de contenu demandé, l'adresse IP utilisée par le terminal 1 pour communiquer avec le serveur de cache 15, un paramètre de qualité de service de la session.

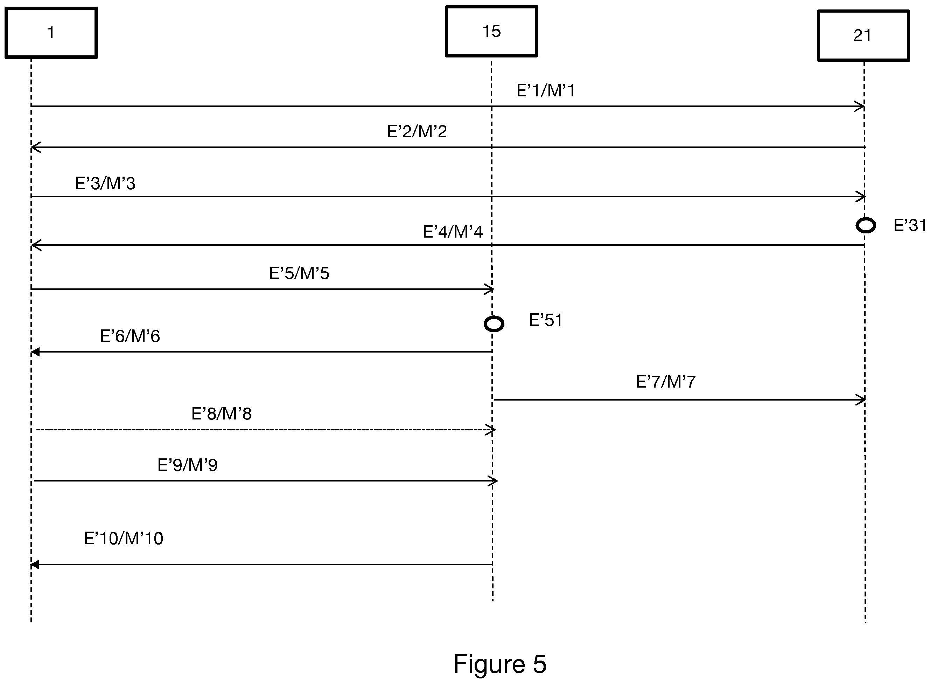

En lien avec la **figure 5****,** on présente les différentes étapes du procédé de recommandation d'une pile de communication, selon un second mode de réalisation de l'invention.

Ce mode de réalisation diffère du premier mode décrit ci-dessus par le type de protocole utilisé pour recommander au terminal une pile de communication et par les types des serveurs.

Dans ce mode de réalisation, le terminal 1 veut obtenir un contenu multimédia (vidéo, audio, texte) auprès d'un premier serveur 21 de contenus, qui peut être un serveur HTTP, un serveur FTP ou tout autre type de serveur, qui va rediriger le terminal 1 vers un serveur CDN 15. Les échanges liés notamment au service DNS ne sont pas représentés sur la figure. On considère dans ce mode de réalisation que le serveur de contenus 21 est un serveur HTTP (référencé comme premier serveur).

Les trois premières étapes E'1, E'2, E'3 sont identiques aux étapes E1, E2, E3 de la figure 4 et peuvent donc être reprises de la description proposée pour la figure 4 si ce n'est que la requête d'obtention d'un contenu est transmise par le terminal 1 en utilisant la pile de communication (HTTP/2)/QUIC/UDP/IP.

Le serveur HTTP 21 détecte lors de l'étape E'31 que les protocoles utilisés par le terminal 1 pour émettre le message M'3 ne sont pas compatibles avec un paramètre de communication du serveur CDN 15 (référencé comme second serveur) vers lequel il va rediriger le terminal 1 de façon comparable à ce qui est décrit pour l'étape E31 de la figure 4.

Lors de l'étape E'4, le serveur 21 de contenus transmet un message M'4 de redirection vers le terminal 1. Ce message comprend une l'information sur le serveur CDN 15 à joindre. Il comprend en outre, une information de redirection, par exemple une variable S, transmise dans un champ d'un des protocoles de la pile de communication utilisée par le terminal 1 pour établir une session de données avec le serveur HTTP 21. Dans ce mode de réalisation, il est considéré que le serveur 21 transmet cette information dans le protocole QUIC. Le serveur HTTP 21 n'indique aucune pile de communication au terminal 1. La connexion entre le terminal 1 et le serveur 21 peut être chiffrée, par exemple en utilisant le protocole TLS puisque l'information relative au changement de pile de communication n'est échangée qu'entre le serveur 21 et le terminal 1.

A l'étape E'5, le terminal 1 transmet un message M'5 de requête d'obtention vers le serveur CDN 15 pour obtenir le contenu demandé à l'étape E'1. Cette requête ne contient pas de pile de communication, notamment parce qu'il n'a pas reçu de proposition de pile dans le message M'4 envoyé par le serveur 21.

Lors de l'étape E'51 le serveur CDN 15 sélectionne une pile de communication à recommander au terminal 1. Cette sélection s'opère de façon comparable à l'étape E51 de la figure 4 même si les données utilisées pour sélectionner une nouvelle pile de communication peuvent différer d'une situation à l'autre.

Le serveur CDN 15 transmet un message M'6 de recommandation de pile de communication au terminal 1. Le serveur CDN 15, dans ce mode de réalisation, transmet l'information sur la pile de communication à utiliser dans un champ du protocole HTTP/2 pour informer le terminal d'utiliser la pile de communication RTP/TLS/UDP/IP pour obtenir le contenu. Pour décider du choix de la pile de communication, en l'absence de proposition du terminal 1, le serveur CDN 15 peut lors de l'étape E'51 de détermination de la pile de communication, joindre le serveur HTTP 21 afin d'obtenir des informations lui permettant de sélectionner une pile.

Les étapes E'7, E'8 et E'9 sont comparables aux étapes E7, E8 et E9 de la figure 4.

Le serveur CDN 15 peut en outre transmettre lors d'une étape E'10 un message M'10 d'acquittement au terminal 1.

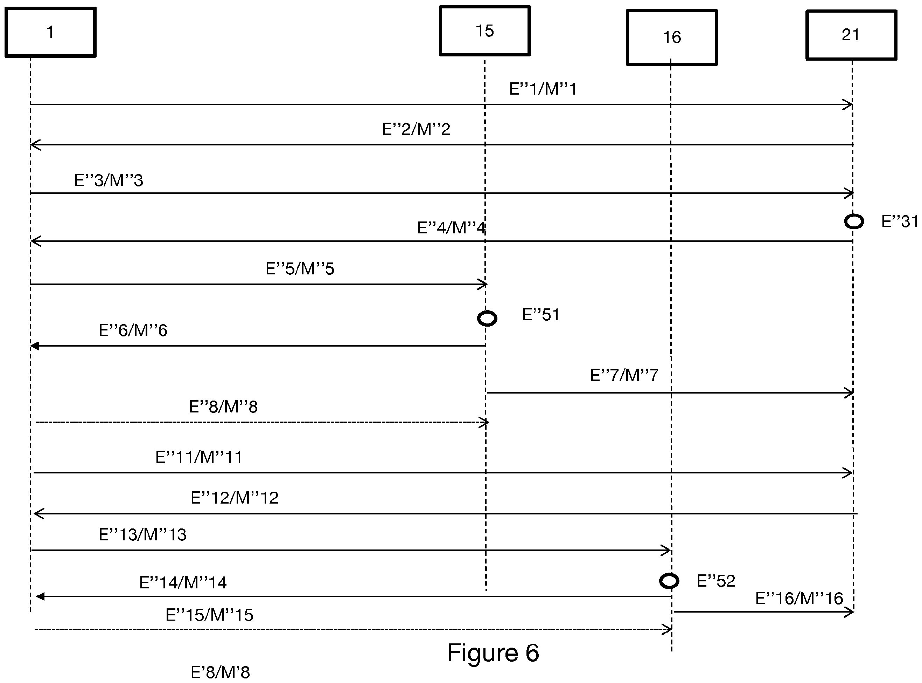

En lien avec la **figure 6****,** on présente les différentes étapes du procédé de recommandation d'une pile de communication, selon un troisième mode de réalisation de l'invention.

Ce mode de réalisation diffère des deux premiers par le fait que le terminal 1 refuse la première pile recommandée par le second serveur et sollicite à nouveau le premier serveur. Ce mode de réalisation diffère en outre des deux premiers modes de réalisation par les protocoles utilisés dans les échanges entre le terminal 1 et les serveurs.

Les premières étapes de E"1 à E"7 sont équivalentes aux étapes E'1 à E'7 de la figure 5. La différence est que le terminal 1 utilise une pile protocolaire (HTTP/2)/TLS/TCP/IP pour communiquer avec le serveur HTTP 21 et le serveur CDN 15. En outre, l'information sur la pile de communication RTP/TLS/UDP/IP proposée par le serveur CDN 15 est transmise dans une extension au protocole TLS (en anglais *Transport Layer Security*)*.* Lorsque le terminal 1 reçoit la proposition de pile de communication dans l'extension TLS du message M"6, il acquitte la réception du message M"6 par l'envoi d'un message d'acquittement M"8 dans une étape E"8.

Cependant, il n'accepte pas la pile de communication proposée par le serveur CDN 15. Ce refus peut s'expliquer par le fait qu'il ne supporte pas un protocole ou une version de protocole de la pile proposée ou parce que la pile proposée n'est pas compatibles avec la politique de l'opérateur fournissant l'accès au réseau de communication du terminal, voire par refus du client auquel appartient le terminal 1.

Dans ce mode de réalisation, le terminal 1 envoie un message M"11 au cours de l'étape E"11 de requête d'obtention du contenu, identique au message E"3. Il lui est possible de notifier dans ce message une indication permettant au serveur HTTP 21 de savoir qu'il refuse une pile de communication proposée par le serveur CDN vers lequel le serveur 21 l'a redirigé. Le serveur HTTP 21 lui répond lors de l'étape E"12 en lui transmettant un message comparable au message M"4 mais redirigeant le terminal 1 vers un autre second serveur 16, et optionnellement en proposant une pile de communication supportée par le second serveur 16. Les étapes suivantes E"13, E"51, E"14, E"15, E"16 et les messages correspondants sont identiques aux étapes respectives E"5, E"51, E"6, E"8, E"7 et aux messages correspondants, excepté que le serveur CDN 16 remplace le serveur CDN 15 dans les échanges.

Selon une alternative, le serveur CDN 15 peut envoyer au terminal 1 une liste de piles de communications lors de l'étape E"6, la dernière pile de communication de la liste étant une pile par défaut (par exemple HTTP/UDP/IP) qui est supportée par tout type de terminal permettant ainsi que le terminal puisse obtenir son contenu.

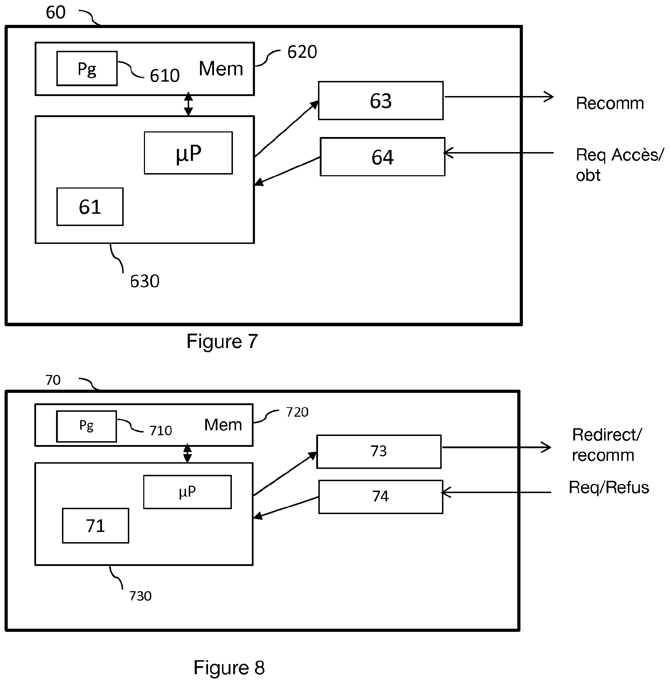

En relation avec la **figure 7****,** on présente maintenant un exemple de structure d'un dispositif de recommandation d'une pile de communication, selon un aspect de l'invention.

Le dispositif 60 de recommandation d'une pile de communication met en œuvre le procédé de recommandation d'une pile de communication, dont différents modes de réalisation viennent d'être décrits.

Un tel dispositif 60 peut être mis en œuvre dans un équipement de type serveur CDN ou dans un serveur cache voire dans un serveur de stockage présent dans le réseau de communication.

Par exemple, le dispositif 60 comprend une unité de traitement 630, équipée par exemple d'un microprocesseur µP, et pilotée par un programme d'ordinateur 610, stocké dans une mémoire 620 et mettant en œuvre le procédé de recommandation d'une pile de communication selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- Un récepteur (64) d'un message de requête d'obtention du contenu en provenance d'un terminal,
- Un module de sélection (61) d'une pile à recommander en fonction d'une donnée relative au réseau de communication ou au message de requête d'obtention reçu,
- Un émetteur (63) d'un message de recommandation comprenant la pile recommandée à destination du terminal,
- Un récepteur (64) d'un message d'obtention du contenu transmis par le terminal en utilisant la pile recommandée.

Avantageusement, le dispositif 60 peut comprendre:
- Un émetteur (63) d'un message d'information comprenant la pile recommandée à destination d'un premier serveur.

En relation avec la **figure 8****,** on présente maintenant un exemple de structure d'un dispositif de redirection selon un aspect de l'invention.

Le dispositif 70 de redirection met en œuvre le procédé de redirection, dont différents modes de réalisation viennent d'être décrits.

Un tel dispositif 70 peut être mis en œuvre dans un équipement de type serveur CDN ou dans un serveur Web ou de façon plus générique dans tout serveur sollicité pour fournir un contenu (données, audio, vidéo).

Par exemple, le dispositif 70 comprend une unité de traitement 730, équipée par exemple d'un microprocesseur µP, et pilotée par un programme d'ordinateur 710, stocké dans une mémoire 720 et mettant en œuvre le procédé de recommandation d'une pile de communication selon l'invention. A l'initialisation, les instructions de code du programme d'ordinateur 710 sont par exemple chargées dans une mémoire RAM, avant d'être exécutées par le processeur de l'unité de traitement 730.

Un tel dispositif 70 comprend :
- Un récepteur (74) d'un message de requête d'un contenu en provenance d'un terminal,
- Un détecteur (71) d'une incompatibilité de la pile utilisée par le terminal avec un paramètre de communication d'un second serveur,
- Un émetteur (73) d'un message de redirection comprenant une information relative à une recommandation d'une pile de communication, composé d'une pluralité de protocoles de communication, vers le terminal.

Avantageusement, le dispositif 70 peut comprendre:
- un récepteur (74) d'un message contenant une information de refus de la pile recommandée reçue, émis par le terminal,
- un récepteur (74) d'un message d'information comprenant la pile recommandée en provenance du second serveur.

Les modules décrits en relation avec la figure 7 et la figure 8 peuvent être des modules matériels ou logiciels.

Les exemples de réalisation de l'invention qui viennent d'être présentés ne sont que quelques-uns des modes de réalisation envisageables. Ils montrent que l'invention permet de gérer la complexité grandissante des architectures des réseaux de communication due notamment au développement des protocoles à différentes couches (réseau, transport, application...). Ce développement des couches et les différentes combinaisons possibles pour constituer les piles de communications utilisées par les terminaux, les premiers serveurs et les seconds serveurs pour communiquer requièrent de nouvelles solutions. L'invention décrite dans ce document permet d'intervenir sur la sélection d'une pile de communication adéquate pour le contenu souhaité par un terminal et adaptée aux contraintes des réseaux. Par la mise en œuvre de cette invention, le premier serveur sollicité initialement par le terminal pour fournir un contenu, le second serveur en charge de fournir effectivement le contenu mais aussi le terminal d'un utilisateur peuvent intervenir pour sélectionner ou non une pile de communication. Cette invention peut aussi être utilisée par exemple par un premier serveur pour orienter un terminal vers un second serveur compatible avec une pile de communication utilisée par un terminal. Cette invention peut donc être mise à profit pour déterminer un second serveur et compléter l'arbre de décision du premier serveur pour sélectionner un second serveur à partir de paramètres enrichis comprenant la pile de communication à utiliser, la localisation du terminal, la charge de serveurs.

## Revendications

1. Procédé de recommandation d'une pile de communication composée d'une pluralité de protocoles de communication, relative à une session de données initiée entre un terminal (1) et un premier serveur (21) pour l'obtention d'un contenu dans un réseau de communications (100) comprenant un second serveur (15), en charge de la fourniture du contenu, par délégation du premier serveur (21), au terminal (1), le premier serveur (21) ayant détecté une incompatibilité de la pile utilisée par le terminal (1) avec un paramètre de communication du second serveur (15) et ayant émis un message (M4) de redirection identifiant le second serveur qu'il doit joindre pour obtenir le contenu désiré et comprenant une information relative à une recommandation de la pile à utiliser pour obtenir le contenu vers le terminal (1), le procédé étant mis en œuvre par le second serveur et comprenant :
• une étape (E5) de réception en provenance du terminal (1) d'un message (M5) de requête d'obtention du contenu,
• une étape de sélection (E51) d'une pile recommandée à utiliser pour obtenir le contenu en fonction d'une donnée relative au réseau de communication ou au message (M5) de requête d'obtention reçu,
• une étape (E6) d'émission à destination du terminal (1) d'un message (M6) de recommandation comprenant la pile recommandée,
• une étape (E9) de réception d'un message (M9) transmis par le terminal (1) en utilisant la pile recommandée, relatif à l'obtention du contenu.

2. Procédé de recommandation d'une pile de communication selon la revendication 1, comprenant en outre une étape d'émission à destination du premier serveur (21) d'un message (M7) d'information comprenant la pile recommandée.

3. Procédé de recommandation d'une pile de communication selon la revendication 1 où le message (M5) de requête d'obtention du contenu comprend au moins une pile de communication.

4. Procédé de recommandation d'une pile de communication selon la revendication 1, où la pile recommandée est transmise dans un champ de la couche applicative du message (M6) de recommandation.

5. Procédé de recommandation d'une pile de communication selon la revendication 1, où la pile recommandée est transmise dans un champ de la couche transport du message (M6) de recommandation.

6. Procédé de recommandation d'une pile de communication selon la revendication 1, où la donnée relative au réseau de communication est reçue en provenance d'une entité de gestion du réseau de communication.

7. Procédé de redirection d'une requête d'obtention d'un contenu relative à une session de données utilisant une pile de communication composée d'une pluralité de protocoles de communication, ladite session étant initiée entre un terminal (1) et un premier serveur (21) compris dans un réseau de communications pour l'obtention du contenu, ledit réseau comprenant en outre un second serveur (15) en charge de la fourniture du contenu, à par délégation du premier serveur (21), au terminal (1), le procédé étant mis en œuvre par le premier serveur (21) et comprenant :
• Une étape (E3) de réception en provenance du terminal (1) d'un message (M3) de requête du contenu
• Une étape (E31) de détection d'une incompatibilité de la pile utilisée par le terminal (1) avec un paramètre de communication du second serveur (15),
• Une étape (E4) d'émission à destination du terminal (1) d'un message (M4) de redirection identifiant le second serveur (15) qu'il doit joindre pour obtenir le contenu désiré, le message de redirection comprenant une information relative à une recommandation de la pile de communication à utiliser pour obtenir le contenu.

8. Procédé de redirection selon la revendication 7, comprenant en outre une étape (E"11) de réception en provenance du terminal (1) d'un message (M"11) contenant une information de refus de la pile recommandée reçue.

9. Procédé de redirection selon la revendication 7, où le paramètre de communication du second serveur (15) est un protocole de communication.

10. Dispositif de recommandation d'une pile de communication, composé d'une pluralité de protocoles de communication, relative à une session de données initiée entre un terminal (1) et un premier serveur (21) pour l'obtention d'un contenu dans un réseau de communications, comprenant un second serveur (15) en charge de la fourniture du contenu au terminal (1), par délégation du premier serveur (21), le premier serveur (21) ayant détecté une incompatibilité de la pile utilisée par le terminal (1) avec un paramètre de communication du second serveur (15), et ayant émis un message (M4) de redirection identifiant le second serveur qu'il doit joindre pour obtenir le contenu désiré et comprenant une information relative à une recommandation de la pile à utiliser pour obtenir le contenu vers le terminal (1), ledit dispositif de recommandation comprenant:
• Un récepteur (64) agencé pour recevoir un message (M5) en provenance du terminal (1) de requête d'obtention du contenu,
• Un module de sélection (61) agencé pour sélectionner une pile recommandée à utiliser pour obtenir le contenu en fonction d'une donnée relative au réseau de communication ou au message (M5) de requête d'obtention reçu,
• Un émetteur (63) agencé pour émettre à destination du terminal (1) un message (M6) de recommandation comprenant la pile recommandée,
• Un récepteur (64) agencé pour recevoir un message (M9) transmis par le terminal (1) en utilisant la pile recommandée, relatif à l'obtention du contenu.

11. Dispositif de redirection d'une requête d'obtention d'un contenu relative à une session de données utilisant une pile de communication composée d'une pluralité de protocoles de communication, ladite session étant initiée entre un terminal (1) et un premier serveur (21) compris dans un réseau de communications pour l'obtention du contenu, ledit réseau comprenant en outre un second serveur (15) en charge de la fourniture du contenu, par délégation du premier serveur (21), ledit dispositif de redirection comprenant:
• Un récepteur (74) agencé pour recevoir un message (M3) de requête du contenu en provenance du terminal (1),
• Un détecteur (71) agencé pour détecter une incompatibilité de la pile utilisée par le terminal (1) avec un paramètre de communication du second serveur (15),
• Un émetteur (73) agencé pour émettre à destination du terminal (1) un message (M4) de redirection identifiant le second serveur qu'il doit joindre pour obtenir le contenu désiré, le message de redirection comprenant une information relative à une recommandation de la pile de communication à utiliser pour obtenir le contenu.

12. Dispositif de redirection selon la revendication 11, comprenant en outre un récepteur (74) agencé pour recevoir en provenance du terminal (1) un message (M"11) contenant une information de refus de la pile recommandée reçue.

13. Terminal requérant l'obtention d'un contenu dans un réseau de communication par une session de données utilisant une pile de communication composée d'une pluralité de protocoles de communication et initialisée avec un premier serveur (21) d'un réseau de communication, ledit réseau comprenant en outre un second serveur (15) en charge de la fourniture du contenu au terminal (1), par délégation du premier serveur (21), ledit terminal comprenant :
∘ Un émetteur agencé pour émettre à destination du premier serveur un message (M3) de requête d'obtention du contenu,
∘ Un récepteur agencé pour recevoir un message (M4) émis par le premier serveur de redirection identifiant le second serveur que le terminal doit joindre pour obtenir le contenu désiré etcomprenant une information relative à une pile à utiliser pour obtenir le contenu,
∘ Un émetteur agencé pour émettre à destination du second serveur (15) un message (M5) de requête d'obtention du contenu, comprenant la pile recommandée dans le message de redirection,
∘ Un récepteur agencé pour recevoir un message (M6) émis par le second serveur (15) de recommandation de pile,
∘ Un émetteur agencé pour émettre à destination du second serveur (15) un message (M9) d'obtention du contenu transmis en utilisant la pile recommandée par le second serveur.

14. Système de recommandation d'une pile de communication composée d'une pluralité de protocoles de communication, relative à une session de données initiée entre un terminal (1) et un premier serveur (21) pour l'obtention d'un contenu dans un réseau de communications, comprenant un second serveur (15), en charge de la fourniture du contenu au terminal (1), par délégation du premier serveur (21), ledit système comprenant :
• Le premier serveur comprenant un dispositif de redirection selon la revendication 11,
• Le second serveur comprenant un dispositif de recommandation d'une pile de communication selon la revendication 10,
• Le terminal selon la revendication 13.

15. Programme d'ordinateur, **caractérisé en ce qu'**il comprend des instructions pour la mise en œuvre des étapes du procédé de recommandation d'une pile de communication selon la revendication 1, lorsque ce procédé est exécuté par un processeur.

16. Support d'enregistrement lisible par un dispositif de recommandation d'une pile de communication conforme à la revendication 10 sur lequel est enregistré le programme selon la revendication 15.

## Patentansprüche

1. Verfahren zur Empfehlung eines Kommunikationsstapels, der aus einer Mehrzahl von Kommunikationsprotokollen gebildet ist, in Bezug auf eine Datensitzung, die zwischen einem Endgerät (1) und einem ersten Server (21) zum Erhalt eines Inhalts in einem Kommunikationsnetz (100) initiiert wird, das einen zweiten Server (15) umfasst, der für die Bereitstellung des Inhalts an das Endgerät (1) im Auftrag des ersten Servers (21) zuständig ist, wobei der erste Server (21) eine Inkompatibilität des Stapels, der vom Endgerät (1) genutzt wird, mit einem Kommunikationsparameter des zweiten Servers (15) detektiert hat und eine Weiterleitungsnachricht (M4), die den zweiten Server identifiziert, den es erreichen muss, um den gewünschten Inhalt zu erhalten, und eine Information in Bezug auf eine Empfehlung des Stapels umfasst, der zu nutzen ist, um den Inhalt zu erhalten, zum Endgerät (1) gesendet hat, wobei das Verfahren vom zweiten Server durchgeführt wird und Folgendes umfasst:
• einen Schritt (E5) des Empfangens, vom Endgerät (1), einer Anforderungsnachricht (M5) zum Erhalt des Inhalts,
• einen Schritt des Auswählens (E51) eines empfohlenen Stapels, der zu nutzen ist, um den Inhalt zu erhalten, je nach einem Datenelement in Bezug auf das Kommunikationsnetz oder die empfangene Anforderungsnachricht (M5) zum Erhalt,
• einen Schritt (E6) des Sendens einer Empfehlungsnachricht (M6), die den empfohlenen Stapel umfasst, an das Endgerät (1),
• einen Schritt (E9) des Empfangens einer Nachricht (M9), die vom Endgerät (1) unter Nutzung des empfohlenen Stapels übertragen wird, in Bezug auf den Erhalt des Inhalts.

2. Verfahren zur Empfehlung eines Kommunikationsstapels nach Anspruch 1, ferner umfassend einen Schritt des Sendens einer Informationsnachricht (M7), die den empfohlenen Stapel umfasst, an den ersten Server (21).

3. Verfahren zur Empfehlung eines Kommunikationsstapels nach Anspruch 1, wobei die Anforderungsnachricht (M5) zum Erhalt des Inhalts mindestens einen Kommunikationsstapel umfasst.

4. Verfahren zur Empfehlung eines Kommunikationsstapels nach Anspruch 1, wobei der empfohlene Stapel in einem Feld der Anwendungsschicht der Empfehlungsnachricht (M6) übertragen wird.

5. Verfahren zur Empfehlung eines Kommunikationsstapels nach Anspruch 1, wobei der empfohlene Stapel in einem Feld der Transportschicht der Empfehlungsnachricht (M6) übertragen wird.

6. Verfahren zur Empfehlung eines Kommunikationsstapels nach Anspruch 1, wobei das Datenelement in Bezug auf das Kommunikationsnetz von einer Verwaltungseinheit des Kommunikationsnetzes empfangen wird.

7. Verfahren zur Weiterleitung einer Anforderung zum Erhalt eines Inhalts in Bezug auf eine Datensitzung, die einen Kommunikationsstapel nutzt, der von einer Mehrzahl von Kommunikationsprotokollen gebildet ist, wobei die Sitzung zwischen einem Endgerät (1) und einem ersten Server (21), die in einem Kommunikationsnetz enthalten sind, zum Erhalt des Inhalts initiiert wird, wobei das Netz ferner einen zweiten Server (15) umfasst, der für die Bereitstellung des Inhalts an das Endgerät (1) im Auftrag des ersten Servers (21) zuständig ist, wobei das Verfahren vom ersten Server (21) durchgeführt wird und Folgendes umfasst:
• einen Schritt (E3) des Empfangens, vom Endgerät (1), einer Anforderungsnachricht (M3) des Inhalts,
• einen Schritt (E31) des Detektierens einer Inkompatibilität des Stapels, der vom Endgerät (1) genutzt wird, mit einem Kommunikationsparameter des zweiten Servers (15),
• einen Schritt (E4) des Sendens, an das Endgerät (1), einer Weiterleitungsnachricht (M4), die den zweiten Server (15) identifiziert, den es erreichen muss, um den gewünschten Inhalt zu erhalten, wobei die Weiterleitungsnachricht eine Information in Bezug auf eine Empfehlung des Kommunikationsstapels umfasst, der zu nutzen ist, um den Inhalt zu erhalten.

8. Weiterleitungsverfahren nach Anspruch 7, ferner umfassend einen Schritt (E''11) des Empfangens einer Nachricht (M''11) vom Endgerät (1), die eine Information einer Ablehnung des empfangenen empfohlenen Stapels enthält.

9. Weiterleitungsverfahren nach Anspruch 7, wobei der Kommunikationsparameter des zweiten Servers (15) ein Kommunikationsprotokoll ist.

10. Vorrichtung zur Empfehlung eines Kommunikationsstapels, die aus einer Mehrzahl von Kommunikationsprotokollen gebildet ist, in Bezug auf eine Datensitzung, die zwischen einem Endgerät (1) und einem ersten Server (21) zum Erhalt eines Inhalts in einem Kommunikationsnetz initiiert wird, das einen zweiten Server (15) umfasst, der für die Bereitstellung des Inhalts an das Endgerät (1) im Auftrag des ersten Servers (21) zuständig ist, wobei der erste Server (21) eine Inkompatibilität des Stapels, der vom Endgerät (1) genutzt wird, mit einem Kommunikationsparameter des zweiten Servers (15) detektiert hat und eine Weiterleitungsnachricht (M4), die den zweiten Server identifiziert, den es erreichen muss, um den gewünschten Inhalt zu erhalten, und eine Information in Bezug auf eine Empfehlung des Stapels umfasst, der zu nutzen ist, um den Inhalt zu erhalten, zum Endgerät (1) gesendet hat, wobei die Empfehlungsvorrichtung Folgendes umfasst:
• einen Empfänger (64), der angeordnet ist, eine Anforderungsnachricht (M5) zum Erhalt des Inhalts vom Endgerät (1) zu empfangen,
• ein Auswahlmodul (61), das angeordnet ist, einen empfohlenen Stapel, der zu nutzen ist, um den Inhalt zu erhalten, je nach einem Datenelement in Bezug auf das Kommunikationsnetz oder die empfangene Anforderungsnachricht (M5) zum Erhalt auszuwählen,
• einen Sender (63), der angeordnet ist, eine Empfehlungsnachricht (M6), die den empfohlenen Stapel umfasst, an das Endgerät (1) zu senden,
• einen Empfänger (64), der angeordnet ist, eine Nachricht (M9), die vom Endgerät (1) unter Nutzung des empfohlenen Stapels übertragen wird, in Bezug auf den Erhalt des Inhalts zu empfangen.

11. Vorrichtung zur Weiterleitung einer Anforderung zum Erhalt eines Inhalts in Bezug auf eine Datensitzung, die einen Kommunikationsstapel nutzt, der von einer Mehrzahl von Kommunikationsprotokollen gebildet ist, wobei die Sitzung zwischen einem Endgerät (1) und einem ersten Server (21), die in einem Kommunikationsnetz enthalten sind, zum Erhalt des Inhalts initiiert wird, wobei das Netz ferner einen zweiten Server (15) umfasst, der für die Bereitstellung des Inhalts im Auftrag des ersten Servers (21) zuständig ist, wobei die Weiterleitungsvorrichtung Folgendes umfasst:
• einen Empfänger (74), der angeordnet ist, eine Nachricht (M3) zur Anforderung des Inhalts vom Endgerät (1) zu empfangen,
• einen Detektor (71), der angeordnet ist, eine Inkompatibilität des Stapels, der vom Endgerät (1) genutzt wird, mit einem Kommunikationsparameter des zweiten Servers (15) zu detektieren,
• einen Sender (73), der angeordnet ist, an das Endgerät (1) eine Weiterleitungsnachricht (M4) zu senden, die den zweiten Server identifiziert, den es erreichen muss, um den gewünschten Inhalt zu erhalten, wobei die Weiterleitungsnachricht eine Information in Bezug auf eine Empfehlung des Kommunikationsstapels umfasst, der zu nutzen ist, um den Inhalt zu erhalten.

12. Weiterleitungsvorrichtung nach Anspruch 11, ferner umfassend einen Empfänger (74), der angeordnet ist, eine Nachricht (M''11) vom Endgerät (1) zu empfangen, die eine Information einer Ablehnung des empfangenen empfohlenen Stapels enthält.

13. Endgerät, das den Erhalt eines Inhalts in einem Kommunikationsnetz durch eine Datensitzung anfordert, die einen Kommunikationsstapel nutzt, der aus einer Mehrzahl von Kommunikationsprotokollen gebildet ist und mit einem ersten Server (21) eines Kommunikationsnetzes initialisiert ist, wobei das Netz ferner einen zweiten Server (15) umfasst, der für die Bereitstellung des Inhalts an das Endgerät (1) im Auftrag des ersten Servers (21) zuständig ist, wobei das Endgerät Folgendes umfasst:
o einen Sender, der angeordnet ist, an den ersten Server eine Anforderungsnachricht (M3) zum Erhalt des Inhalts zu senden,
o einen Empfänger, der angeordnet ist, eine Nachricht (M4) zu empfangen, die vom ersten Weiterleitungsserver gesendet wird, die den zweiten Server identifiziert, den das Endgerät erreichen muss, um den gewünschten Inhalt zu erhalten, und die eine Information in Bezug auf einen Stapel umfasst, der zu nutzen ist, um den Inhalt zu erhalten,
o einen Sender, der angeordnet ist, an den zweiten Server (15) eine Anforderungsnachricht (M5) zum Erhalt des Inhalts zu senden, die den Stapel umfasst, der in der Weiterleitungsnachricht empfohlen wird,
o einen Empfänger, der angeordnet ist, eine Nachricht (M6) zu empfangen, die vom zweiten Server (15) zur Empfehlung des Stapels gesendet wird,
o einen Sender, der angeordnet ist, an den zweiten Server (15) eine Nachricht (M9) des Erhalts des Inhalts zu senden, die unter Nutzung des Stapels übertragen wird, der vom zweiten Server empfohlen wird.

14. System zur Empfehlung eines Kommunikationsstapels, der aus einer Mehrzahl von Kommunikationsprotokollen gebildet ist, in Bezug auf eine Datensitzung, die zwischen einem Endgerät (1) und einem ersten Server (21) zum Erhalt eines Inhalts in einem Kommunikationsnetz initiiert wird, das einen zweiten Server (15) umfasst, der für die Bereitstellung des Inhalts an das Endgerät (1) im Auftrag des ersten Servers (21) zuständig ist, wobei das System Folgendes umfasst:
• den ersten Server, der eine Weiterleitungsvorrichtung nach Anspruch 11 umfasst,
• den zweiten Server, der eine Vorrichtung zur Empfehlung eines Kommunikationsstapels nach Anspruch 10 umfasst,
• das Endgerät nach Anspruch 13.

15. Computerprogramm, **dadurch gekennzeichnet, dass** es Anweisungen zur Durchführung der Schritte des Verfahrens zur Empfehlung eines Kommunikationsstapels nach Anspruch 1, wenn dieses Verfahren von einem Prozessor ausgeführt wird, umfasst.

16. Speichermedium, das von einer Vorrichtung zur Empfehlung eines Kommunikationsstapels nach Anspruch 10 gelesen werden kann, auf dem das Programm nach Anspruch 15 gespeichert ist.

## Claims

1. Method for recommending a communication stack composed of a plurality of communication protocols, which relates to a data session initiated between a terminal (1) and a first server (21) with a view to obtaining a content in a communications network (100) comprising a second server (15) in charge of the provision of the content, by delegation of the first server (21), to the terminal (1), the first server (21) having detected an incompatibility of the stack used by the terminal (1) with a communication parameter of the second server (15) and having sent the terminal (1) a redirection message (M4) identifying the second server that it must reach to obtain the desired content and comprising an information item relating to a recommendation of the stack to be used to obtain the content, the method being implemented by the second server and comprising:
• a step (E5) of receiving from the terminal (1) a message (M5) requesting obtainment of the content,
• a step (E51) of selecting a stack recommended to be used to obtain the content as a function of a data item relating to the communication network or to the obtainment request message (M5) received,
• a step (E6) of sending the terminal (1) a recommendation message (M6) comprising the recommended stack,
• a step (E9) of receiving a message (M9) transmitted by the terminal (1) by using the recommended stack, and relating to the obtainment of the content.

2. Method for recommending a communication stack according to Claim 1, furthermore comprising a step of sending the first server (21) an information message (M7) comprising the recommended stack.

3. Method for recommending a communication stack according to Claim 1 where the message (M5) requesting obtainment of the content comprises at least one communication stack.

4. Method for recommending a communication stack according to Claim 1, where the recommended stack is transmitted in a field of the application layer of the recommendation message (M6).

5. Method for recommending a communication stack according to Claim 1, where the recommended stack is transmitted in a field of the transport layer of the recommendation message (M6).

6. Method for recommending a communication stack according to Claim 1, where the data item relating to the communication network is received from a management entity of the communication network.

7. Method for redirecting a content obtainment request relating to a data session using a communication stack composed of a plurality of communication protocols, said session being initiated between a terminal (1) and a first server (21) in a communications network with a view to obtaining the content, said network furthermore comprising a second server (15) in charge of the provision of the content, by delegation of the first server (21), to the terminal (1), the method being implemented by the first server (21) and comprising:
• A step (E3) of receiving from the terminal (1) a message (M3) requesting the content,
• A step (E31) of detecting an incompatibility of the stack used by the terminal (1) with a communication parameter of the second server (15),
• A step (E4) of sending the terminal (1) a redirection message (M4) identifying the second server (15) that it must reach to obtain the desired content, the redirection message comprising an information item relating to a recommendation of the communication stack to be used to obtain the content.

8. Redirection method according to Claim 7, furthermore comprising a step (E"11) of receiving from the terminal (1) a message (M''11) containing an information item of refusal of the recommended stack received.

9. Redirection method according to Claim 7, where the communication parameter of the second server (15) is a communication protocol.

10. Device for recommending a communication stack, composed of a plurality of communication protocols, which relates to a data session initiated between a terminal (1) and a first server (21) with a view to obtaining a content in a communications network, comprising a second server (15) in charge of the provision of the content to the terminal (1), by delegation of the first server (21), the first server (21) having detected an incompatibility of the stack used by the terminal (1) with a communication parameter of the second server (15), and having sent the terminal (1) a redirection message (M4) identifying the second server that it must reach to obtain the desired content and comprising an information item relating to a recommendation of the stack to be used to obtain the content, said recommendation device comprising:
• A receiver (64) designed to receive a message (M5) from the terminal (1) requesting obtainment of the content,
• A selection module (61) designed to select a stack recommended to be used to obtain the content as a function of a data item relating to the communication network or to the obtainment request message (M5) received,
• A sender (63) designed to send the terminal (1) a recommendation message (M6) comprising the recommended stack,
• A receiver (64) designed to receive a message (M9) transmitted by the terminal (1) by using the recommended stack, and relating to the obtainment of the content.

11. Device for redirecting a content obtainment request relating to a data session using a communication stack composed of a plurality of communication protocols, said session being initiated between a terminal (1) and a first server (21) in a communications network with a view to obtaining the content, said network furthermore comprising a second server (15) in charge of the provision of the content by delegation of the first server (21), said redirection device comprising:
• A receiver (74) designed to receive a message (M3) requesting the content from the terminal (1),
• A detector (71) designed to detect an incompatibility of the stack used by the terminal (1) with a communication parameter of the second server (15),
• A sender (73) designed to send the terminal (1) a redirection message (M4) identifying the second server that it must reach to obtain the desired content, the redirection message comprising an information item relating to a recommendation of the communication stack to be used to obtain the content.

12. Redirection device according to Claim 11, furthermore comprising a receiver (74) designed to receive from the terminal (1) a message (M"11) containing an information item of refusal of the recommended stack received.

13. Terminal requesting obtainment of a content in a communication network via a data session using a communication stack composed of a plurality of communication protocols and initiated with a first server (21) of a communication network, said network furthermore comprising a second server (15) in charge of the provision of the content to the terminal (1), by delegation of the first server (21), said terminal comprising:
o A sender designed to send the first server a message (M3) requesting obtainment of the content,
o A receiver designed to receive a redirection message (M4) sent by the first server identifying the second server that the terminal must reach to obtain the desired content and comprising an information item relating to a stack to be used to obtain the content,
o A sender designed to send the second server (15) a message (M5) requesting obtainment of the content, comprising the stack recommended in the redirection message,
o A receiver designed to receive a stack recommendation message (M6) sent by the second server (15),
o A sender designed to send the second server (15) a message (M9) for obtainment of the content transmitted by using the stack recommended by the second server.

14. System for recommending a communication stack composed of a plurality of communication protocols, which relates to a data session initiated between a terminal (1) and a first server (21) with a view to obtaining a content in a communications network, comprising a second server (15) in charge of the provision of the content to the terminal (1), by delegation of the first server (21), said system comprising:
• The first server comprising a redirection device according to Claim 11,
• The second server comprising a device for recommending a communication stack according to Claim 10,
• The terminal according to Claim 13.

15. Computer program, **characterized in that** it comprises instructions for the implementation of the steps of the method for recommending a communication stack according to Claim 1, when this method is executed by a processor.

16. Storage medium readable by a device for recommending a communication stack according to Claim 10, on which the program according to Claim 15 is stored.
